# EUROPEAN PATENT APPLICATION

(11) **EP 1 074 526 A2**
(43) Date of publication of application: **07.02.2001**
(21) Application number: 00500172.2
(22) Date of filing: 28.07.2000
(51) Int. Cl.: C03C 17/34

(54) **Method for the formation of an anti-reflective and leveling film on glass/TCO substrates**

(30) Priority: 06.08.1999 ES 9901811
(71) Applicant: CENTRO DE INVESTIGACIONES ENERGETICAS MEDIOAMBIENTALES Y TECNOLOGICAS (C.I.E.M.A.T.), E-28040 Madrid (ES)
(72) Inventor: Morales Sabio, Angel, 28020 Madrid (ES); Guillen Arqueros, Cecilia, 28027 Madrid (ES); Herrero Rueda, José, 28027 Madrid (ES)
(74) Representative: Del Santo Abril, Natividad

(57) **Abstract**

It consists of the stages of: formulation and preparation of the coating bath by means of solutions of mixtures of tetraehtylorthosilicate (TEOS) with methyltriethoxysilane (MTES) in alcohol with a catalyst, with the gel next forming on the substrate by a controlled immersion and removal of it from the coating bath with the above solution, to later proceed to the drying of the formed gel by evaporation of the solvent and to its sintering by means of a thermal treatment in a controlled atmosphere oven at temperatures between 300° and 400° C.

## Description

### Object of the invention

The patent being presented is related to a preparation process of coatings for glass/tin oxide substrates, which will allow a significant improvement of the antireflective properties of these substrates.

### Field of application

The use of glass/tin oxide substrates is of great interest in the development of photovoltaic solar cells in thin sheets when the configuration of the cell is that known as superstratum, in which the light is collected in the photovoltaic devices through a glass/transparent conducting oxide substrate window as that mentioned. The reflection of light in the air/glass interface results in a reduction of the transmittance of sunlight through the window and therefore in a loss of the efficiency of the photovoltaic device deposited on the substrate.

### State of the Art

To avoid this type of loss by reflection different antireflective coatings may be used such as SiO₂ and MgF₂ which can be combined in multi-layer coatings with TiO₂, CeO₂, ZrO₂, SiO and Al₂0₃. The loss due to reflection of the light received on the photovoltaic windows is thus reduced by adjusting of the thickness of the antireflective coats or by the use of multi-layer coatings with graded compositions.

The classic methods for the preparation of antireflective coatings for solar cells are based on vacuum methods or of chemical deposits in vapor phase. These methods generally present the disadvantages of being expensive, requiring high vacuum equipment, the use of high purity chemical products, industrial size production capacity limitations, etc.

### Description of the invention

The sol-gel technology is a simple and extremely economical process for producing vitreous and ceramic coatings of different compositions and on a wide variety of substrates, mainly glass. With this process layers have been produced to give new properties to the coated substrates. The coatings are generally used as protective, dielectric or optical layers. To be mentioned among the advantages of this technology is the generating of vitreous structures in very wide composition margins, which allows to adapt the quality of the coatings to the final needs of the product. The adherence to the substrates is high, since during the coating process chemical bonds are generated between the applied coating and the substrate, also providing a good thermal and electrical stability to the coatings. On the other hand the sol-gel method is very appropriate for the preparation of ceramic oxides such as SiO_{2,} Al₂0_{3,} TiO₂, etc. If we add to this the fact that the mentioned oxides are used to prepare the interface between the air and the glass, it turns out that the application of the sol-gel method is especially adequate for the preparation of anti-reflective coatings on substrates for photovoltaic application.

During recent years this coating technology has been applied in the development of materials used in different systems of solar energy use, *R.B. Pettit et al* in "Use of sol-gel thin films in solar energy applications", *Solar Energy Materials* Volume 14, pages 269 to 287 (1986).

Moreover, during recent years a great interest has arisen, in the development of thin film photovoltaic devices, for the preparation of blocking layers between the substrates and the absorbing layers that make up these devices. Also sought after are layers that can have a leveling effect on the substrate surface in order to improve the characteristics of the successive films that are deposited, while avoiding possible degasifying processes when using vacuum techniques in the preparation of the devices. The oxides prepared by sol-gel combine blocking properties due to the low diffusiveness of the oxygen and of other compounds in these materials, and a leveling effect on the substrate surface directly related to the method of preparation. In this way the sol-gel method and the oxides prepared from it are excellent candidates for the preparation of antireflective coatings and leveling layers with application on thin film photovoltaic devices.

Consequently, the objectives of this patent are the following:
1) A process for preparation of vitreous or polycrystalline coatings of ceramic oxides, using the sol-gel method with the immersion technique, on glass/transparent conducting oxide (TCO) type substrates, to optimize the behavior of these substrates as a window to let sunlight through.
2) A process for preparation of inorganic silicon, vitreous or polycrystalline oxides coatings, on glass/transparent conducting oxide (TCO) type substrates, that while displaying excellent homogeneity, high adherence, and mechanical and electrical compatibility with the substrate, they also improve the passing of sun spectrum visible light through the substrate without significant infrared loss.
3) A process for preparation of inorganic silicon, vitreous or polycrystalline oxides coatings, on glass/transparent conducting oxide type substrates, with a high leveling capacity of the substrate surface that permits the development of an absorbing photovoltaic layer acting as a blocking layer between the conducting oxide and the absorbing layer.

These points have been attained by means of preparing inorganic silicon, vitreous or polycrystalline oxides coatings, on glass/tin oxide type substrates that were later used for the electrochemical depositing of absorbing selenium indium copper photovoltaic layers by electrodeposition.

### Brief description of the figures

The previous and other characteristics of this invention can be better understood from the following detailed description of the figures that accompany this document.

Figure 1 shows a simplified flow chart that represents the process used in the preparation of a layer for photovoltaic application on glass/tin oxide substrates coated with an antireflective layer in accord with this invention.

Figure 2 (a) shows a magnified and fragmented view that illustrates the placing of the glass and tin oxide in the substrates to be coated.

Figure 2 (b) shows a magnified and fragmented view that illustrates the placing of the coatings made on the substrates described in figure 2 (a).

Figure 3 shows a graphic representation of the variation of the average transmission in the visible and infrared spectrum of the glass/tin oxide substrates with the antireflective coatings object of this invention (T₁) in relation to the transmission of these substrates without a coating (T₀).

Figure 4 (a) shows a microphotograph obtained by AFM microscopy of the tin oxide surface placed on glass as indicated in figure 2 (a).

Figure 4 (b) shows a microphotograph obtained by AFM microscopy of the surface of an antireflective silicon oxide layer placed on a base of tin oxide as indicated in figure 2 (b).

Figure 5 shows a graphic representation of the variation of the optical absorbance with the thickness of a CulnSe₂ film electrodeposited directly on a similar substrate which has been applied a coating object of this invention. The absorbance A is defined from the following formula: A = 100 - T - R, with T being the percentage of light transmitted through a sample and R the percentage of light reflected on it.

### Detailed description of the invention

### Preparation of the solutions

Taking into account the possible applications various solutions have been studied with different compositions of the silicon oxide precursors by the sol-gel method.

As precursors of the silicon oxide different mixtures of commercial alcoxides have been used: tetraethylorthosilicate (TEOS) with methyltriethoxysilane (MTES) from 0 to 40%.

The solutions are prepared dissolving the alcoxides in distilled water and alcohol with a catalyst. The concentration of water depends on the nature of the alcoxide used, and the water/alcoxide ratio may vary from zero up to passing the stoichiometric ratio necessary to hydrolyze all of the alcohol radicals of the alcoxide used.

The alcohol used may be that corresponding to the alcohol radicals present in the alcoxide, a mixture of this with ethanol or ethanol directly. The alcohol/ alcoxide ratio is one of the parameters that has been necessary to adjust to the glass/tin oxide substrate used, in order that the precise control of this ratio between values of 1 and 70 will determine the antireflective and leveling properties sought in the coating.

As a catalyst of the acid hydrolysis process of the alcoxides mixtures of H₂SO₄/CH₃COOH were used, with this ratio and the final pH determining the forming of stable solutions.

An important aspect of the process of the present invention is a strict formulating of the composition of the solutions. Since the ratio of the chemical reactants in the bath is perfectly controlled and adjusted to the glass/TCO type substrates used, the antireflective properties of the materials that are used as coatings can be determined in a large variety of applications, and therefore adapt to precise requirements.

After the hydrolysis process and once a homogenous solution is formed the coating processes are performed. The aging of the solutions prepared in this way does not affect the antireflective quality of the coatings at least in a period of 6 months.

### Preparation and covering of the substrates

The utilized glass substrates coated with tin oxide on one side are similar to the regular ones available commercially and they had a surface of up to 15x30 cm². The tin oxide layer deposited on one side of the glass has two fundamental missions in its photovoltaic application: 1) to act as a frontal electrical contact in the devices that are prepared from this base; and 2) acting as a window, letting sunlight through to the absorbing material of the photovoltaic cell; thus the tin oxide material must be both a conductor and also as transparent as possible.

The physical properties of tin oxide may be altered by the action of different chemical agents, so it is fundamental to optimize the solution of silicon oxide precursors (when the substrates are submerged), to avoid the deterioration of the SnO₂ properties.

As the previous preparation and cleaning of the substrate is fundamental in the adherence and homogeneity of the coatings, before beginning the depositing process the substrates were degreased in adequate mixtures of organic solvents and cleaned in an ultrasound bath with water and neutral soap. Intensive rinsing with deionized water and drying with a fresh air gun finish the cleaning process.

In the event of only wanting to coat the side of the substrate corresponding to the glass, the part of the substrate which presents the tin oxide coating is sealed with a plastic film and a sheet of silicone. This sealing should not have any type of pore or crack, because if it does, and due to the capillarity of the sol-gel used, it would invade the surface of the tin oxide and would coat both sides at the same time. This sealing is easily removed before proceeding to the sintered stages of the coating.

The depositing of the silicon oxide films is done by the method of immersion of the substrate to be coated into the sol-gel precursor solution followed by extracting it at a controlled speed. During the immersion/extraction process no controlled atmosphere is required.

Since the thickness of the film formed by immersion/extraction, and thus its antireflective properties, are determined by the speed and angle of extraction of the substrate, as well as the density, the concentration of alcoxides and the viscosity of the solution, special care must be taken with the control and repetition of these parameters during the coating process.

The extraction speeds of the substrates are adjusted at between 5 and 25 cm per minute. The immersion/extraction is performed at a 90° angle with respect to the solution. The density and viscosity of the solutions are controlled with pycnometry measuring and by the Ostwald method.

After removing the substrate from the solution the next method is to dry the gel that has formed on the substrate surface at a temperature between 50° and 150° C during 15 to 30 minutes in an air atmosphere. The object of this drying is the evaporation of solvent that may have been trapped in the pores of the gel.

The final densifying of the films with the formation of the SiO₂ coating, is done by sintering in ovens where it is possible to control the heating rate, the final sintering temperature and atmosphere of the process. The heating ramps between room temperature and final sintered temperature are regulated between 5° and 10° C per minute. The sintered temperatures vary between 300° and 400° C to adjust to the glass/TCO type substrate used and optimize the antireflective properties of the coating. While lowering the sintered temperature a reduction of the optical reflection is observed on the coating associated with a smaller refraction index of it. On the other hand, temperatures higher than 400° are not recommended since after that point the "softening" of the substrate glass begins and by the variation of the adherence and uniformity properties both of the tin oxide coating that acts as transparent conducting oxide as well as of the applied coating itself.

The thickness and uniformity of the coatings is controlled from profilometric and atomic force microscopy (AFM) measuring, determining crack free and homogenous layers with thicknesses between 0.05 and 0.5 µm.

### Depositing of absorbing photovoltaic layers of selenium indium copper on coated substrates.

Once the coating of silicon oxide film is established the next method is to deposit an absorbing photovoltaic layer of selenium indium copper (CulnSe₂).

The method chosen for its easiness and industrial use is the electrochemical depositing. For this application the method described by *C. Guillén et al*. is followed, as described in *"Cathodic electrodeposition of CulnSe*_{*2*} *thin films", Thin Solid Films Volume 195, pages 137a to 146 (1991).*

The electrodeposited films have a thickness between 0.5 and 2 µm and they display a high optical absorbing coefficient as described by *J. Herrero et al.,* in *Journal of Applied Physics, Volume 69, pages 429 to 432 (January 1991).*

The process followed in this invention with the final application of an absorbing layer of CulnSe₂ by electrodeposition must not be considered as limited neither by the selected absorbing photovoltaic layer nor by the depositing method. The invention is ideally adequate for the preparation of substrates with antireflective, blocking and leveling properties of the surface in devices based on other materials and photovoltaic technologies such as those based on absorbents of cadmium tellurium, CdTe, and amorphous silicon, a-Si.

### Properties of the substrates prepared with antireflective coatings.

The antireflective behaviour of the substrates coated with the layer of silicon oxide deposited by sol-gel has been analyzed by spectrophotometrical measuring of the transmission of light through the substrates both with and without coatings. The results of these tests show that it is possible, by means of a strict control of the solution compositions and of the employed depositing conditions, and the speed and angle of extraction, to obtain antireflective coatings that improve up to 14% the amount of visible radiation through the glass/tin oxide substrates with insignificant loss of the infrared.

The claimed process in this patent considerably improves the obtained results through antireflective coatings applied by sol-gel or any other technique.

The leveling effect of the coatings applied by the sol-gel technique was analyzed by microscopy AFM measuring.

### Properties of the substrates with antireflective coatings and an absorbing photovoltaic layer.

The absorbing behaviour of the substrates with an antireflective coating and the electrodeposited sheet of selenium indium copper has been analyzed by spectrophotometrical measuring of the transmission of light through a system with superstratum type configuration.

The obtained results show that by means of the applied antireflective coatings it is possible to improve the amount of radiation absorbed by the sheet of electrodeposited selenium indium copper.

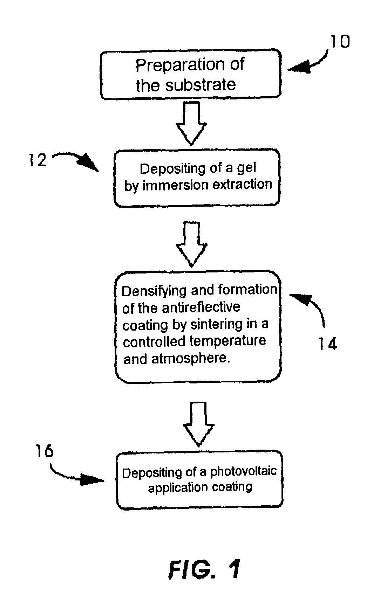

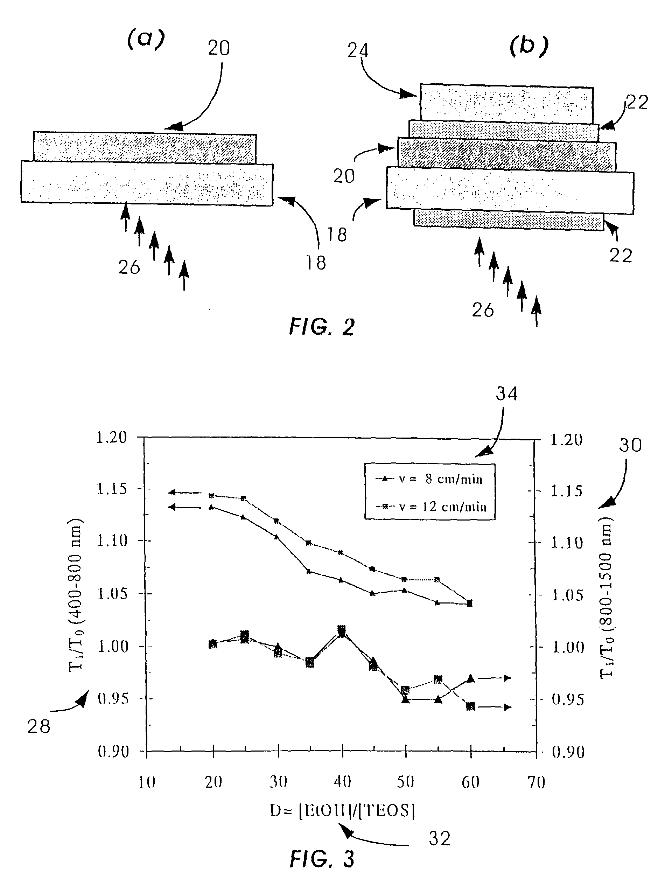

Referring now to figure 1, this illustrates a series of steps 10, 12, 14 and 16 for the application of the process object of this invention. As already indicated, step 10 comprises the cleaning and preparation of the substrate represented in figure 2 (a). This cleaning of the substrate is fundamental for the success of the coating that is intended to be applied, and the adequate sealing of the tin oxide layer 20 as indicated in this invention is strictly necessary when only the side of the glass substrate 18 is intended to be coated by the immersion method.

As already indicated throughout this invention, step 16 is not limited to the CulnSe₂ compound, but rather to any other compound of photovoltaic application 24, due to the versatility and adaptation of the process presented to any of the thin film photovoltaic technologies in use.

The speed of production possible and the control that can be attained of the proposed coating process must make it a simple and cheap method for the formation of antireflective coats on a transparent conducting oxide (TCO) without affecting its optical and electrical properties, whether by the chemical action of the applied sol-gel or by the subsequent sintering processes.

Figure 2 (a) illustrates the placing of the used glass substrate 18 and the commercial coating of SnO₂ 20. The substrate 18 is a non-conducting support material that will allow solar radiation to pass through it. Given the non-conducting characteristic of 18, the SnO₂ layer 20 acts as a frontal electrode once the different processes give way to the formation of a photovoltaic device. The SiO₂ coating 22, object of this invention, is applied to the SnO₂ 20 and the glass 18 when trying to obtain antireflective effects and level the interface between the SnO₂ 20 and the photovoltaic absorbent 24, or only on the glass 18 when only one antireflective layer is required to the direct lighting 26.

The photovoltaic absorbent 24 coating may be CulnSe₂ electrodeposited as in the example described in this invention, or any other absorbing semiconductor material.

The optical properties of the coatings object of this invention may be illustrated in figure 3, where 28 represents the ratio between the average transmission (T₁) in the visible spectrum (400 to 800 nm wave lengths) for a sample of glass/SnO₂ with a coating as those object of this invention, and the average transmission in the same range (T₀) of the substrates without coating and their variation facing the ratio of some of the components of the application bath 32. This variation 28 facing 32 has been repeated for two different speeds of removing the substrates 34 during the forming of the gel.

On the other hand in this same example the variation has been represented of the same ratio T₁/T₀ in the range of the infrared spectrum (800 to 1500 nm wave lengths) 30 facing variations 32 and 34.

From the previous example it is clear that it is possible to apply coatings that increase the visible transmission through the substrate up to 14% without or with minimum loss in the infrared transmission. Thus the method of this invention permits an overall improvement of the transmission of the substrates that are used in photovoltaic solar cells. Variations in the transmission both of the visible spectrum as well as the infrared can easily be controlled by means of the knowledge that exists of the influence over these properties of the composition of the baths in the kinetics of the formation of the applied gel.

It must be highlighted that the sintering step of the gel is attained at temperatures of 300° to 400° C as opposed to the temperatures of 500° to 700° C that are habitually used in the sol-gel processes.

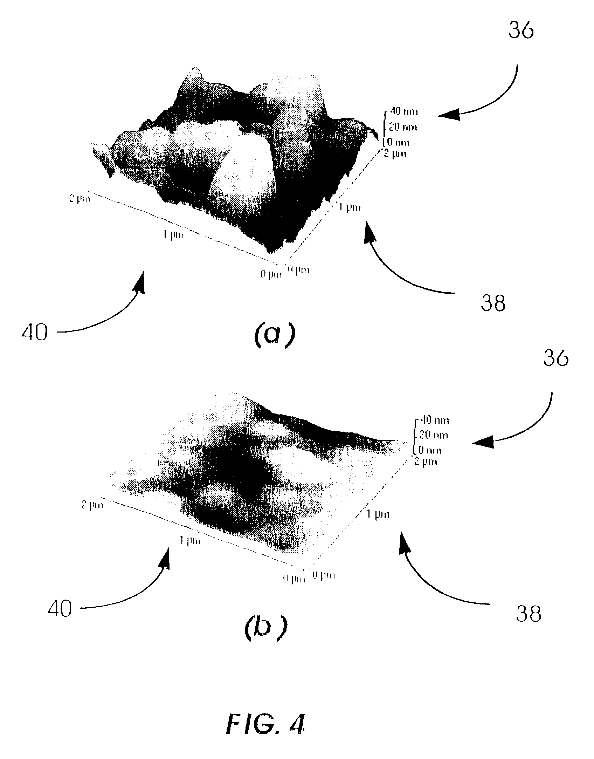

Figure 4 represents an example of how the roughness of a glass substrate 18 - tin oxide 20 affects the application of one of the coatings object of this invention. Figure 4 (a) is the AFM microphotograph of the topography 36 of a tin oxide coat on the surface 38-40 of the glass substrate. This variation in the roughness can be compared with that of figure 4 (b) where on 18-20 a coating of SiO₂ has been applied by the method described in this invention. It is clear from the presented example that the application of one of these coatings obtains a significant effect in the leveling of the substrate's surface. This property of the coatings is of special importance in the development of photovoltaic solar cells whether it is on a substrate as those described or on another type of substrate that may be selected: metal sheets, organic polymers, ultrathin glass, etc., where the roughness of the surface on which the different coatings that make up the solar cells are placed has a crucial importance in the final properties of the photovoltaic cells, as is known in the state of the art, for *example R. Cay et al.,* in *"Efficiency and process improvements in CulnSe*_{*2*}*-based solar cells, "* 12^{th} European Photovoltaic Solar Energy Conference, Amsterdam (NL) 1994 pages 935 to 938.

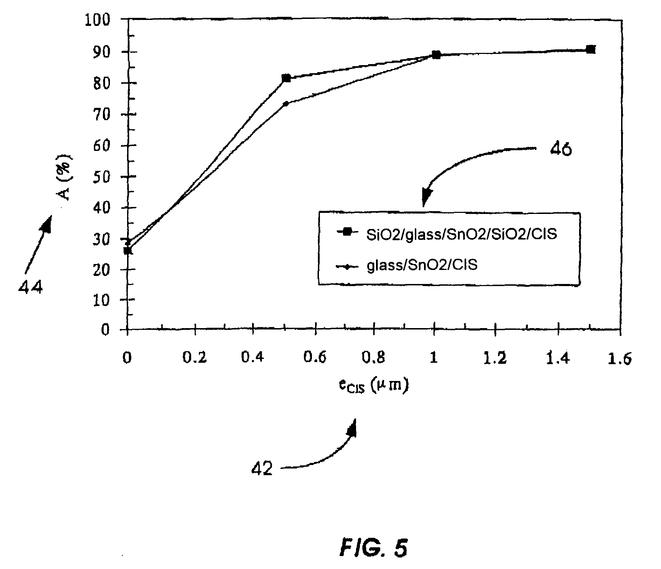

Figure 5 represents the variation of the optical absorbance 44 compared with the thickness 42 of a CulnSe₂ film electrodeposited on two types of samples 46, one on a conventional glass/SnO₂ substrate and another on the same substrate coated with SiO₂ as described in this invention. From the example of the figure it must be understood how it is possible to improve the absorbance of the samples using smaller thicknesses of absorbent semiconductor material when using the SiO₂ coatings as described in this invention. It is easy to understand that an improvement in the absorbance must have a significant effect on the efficiency of a photovoltaic device by improving the percentage of sunlight trapped by the device.

From all of the above it can be seen that a simple and economic process has been developed for the forming of a compound with antireflective and/or leveling properties of the surface of glass/SnO₂ substrates for use in the photovoltaic solar industry.

While certain contents of the present invention may be considered as specific the invention is not limited to those particular contents, but rather it is abundantly applicable with a great amount of variations within the scope of the following claims:

## Claims

1. Method for the formation of an antireflective and leveling film on glass/TCO substrates characterized by comprising the following stages:
Formulation and preparation of the coating bath by means of dissolving commercial alcoxides in alcohol with a catalyst,
Formation of a gel on the substrate by immersion and removal of it in the mentioned coating bath after it has been degreased with organic solvents, washed in an ultrasound bath and rinsed with deionized water, and its later removal from the coating bath at a controlled speed and angle,
Drying of the formed gel by evaporation of the solvent,
Sintering of the film deposited by thermal treatment of the coated substrate.

2. Method for the formation of an antireflective and leveling film on glass/TCO substrates according to Claim 1, characterized in that the alcoxides used are mixtures of tetraethylorthosilicate (TEOS) with methyltriethoxisilane (MTES) from 0 to 40%.

3. Method for the formation of an antireflective and leveling film on glass/TCO substrates according to Claim 1, characterized in that the alcohol/alcoxide ratio varies between 1 and 70, allowing its adjustment to control the optical transmittance and the leveling of the substrates used.

4. Method for the formation of an antireflective and leveling film on glass/TCO substrates according to Claim 1, characterized in that the speed of extraction of the substrate from the coating bath is of 5 to 25 cm per minute and the angle of extraction is of 90°.

5. Method for the formation of an antireflective and leveling film on glass/TCO substrates according to Claim 1, characterized in that the drying of the gel is done during 15 to 30 minutes in an air atmosphere and at a temperature between 50° and 150° C.

6. Method for the formation of an antireflective and leveling film on glass/TCO substrates according to Claim 1, characterized in that the sintering step consist of the densifying of the coating in an oven, controlling the raise in temperature between 5° and 10° C per minute, the final sintering temperature between 300° and 400° C, as well as the process atmosphere.
